(19) Europäisches Patentamt
European Patent Office
Office européen des brevets

(11) **EP 2 853 879 B1**

(12) **EUROPEAN PATENT SPECIFICATION**

(45) Date of publication and mention
of the grant of the patent:
**01.04.2020 Bulletin 2020/14**

(51) Int Cl.:
*G01M 17/10* (2006.01)     *B61K 9/12* (2006.01)

(21) Application number: **13186019.9**

(22) Date of filing: **25.09.2013**

(54) **Apparatus for the inspection of railway axles**

Einrichtung für die Untersuchung von Eisenbahnachsen

Dispositif pour l'inspection d'essieux ferroviaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2015 Bulletin 2015/14**

(73) Proprietor: **DMA S.r.l.**
**10129 Torino (IT)**

(72) Inventors:
• **Santanera, Cesare**
**10129 Torino (IT)**
• **Zingarelli, Angelo**
**10129 Torino (IT)**

(74) Representative: **De Bonis, Paolo**
**Buzzi, Notaro & Antonielli d'Oulx S.p.A.**
**Corso Vittorio Emanuele II, 6**
**10123 Torino (IT)**

(56) References cited:
**EP-A1- 2 402 227**     **DE-A1- 10 102 673**
**DE-A1- 19 924 781**

• **Anonymous: "Linear motor - Wikipedia, the free encyclopedia", , 29 August 2013 (2013-08-29), XP055204275, Wikipedia Retrieved from the Internet: URL:https://en.wikipedia.org/w/index.php?title=Linear_motor&oldid=570701552 [retrieved on 2015-07-23]**

## Description

Field of the invention

The present invention relates to apparatuses for inspecting railway axles. Examples of prior art apparatuses can be found, e.g., in DE 10102673 A1, DE 199 247 81 A1 I, and EP 2 402 227 A1.

Known art

The rolling stock circulating on the railway network is subject to more or less marked phenomena of wear depending upon use and performance of the rolling stock itself.

The large number of railway trains (both for transport of passengers and for transport of goods) that circulate on the railway networks all over the world imposes the need to pay great attention to the safety factor in order to prevent accidents with disastrous consequences or, much more simply, any breakdowns and malfunctioning that adversely affect the quality of the service.

Inspection and checking of railway axles assumes importance in this context in so far as they constitute in effect the interface between the railway vehicle and the railway track. Depending directly upon the conditions of the railway axles are both the efficiency of the rolling stock and, above all, the safety of the railway train and of the passengers.

With the apparatuses for inspecting railway axles currently available it is possible to carry out a thorough inspection of the railway axles basically in concomitance with the operations of periodic overhaul of the rolling stock in the repair shop.

This of course implies the unavailability of the material throughout the period when it is laid up in the repair shop with the consequent need for replacement and the consequent increase in running costs.

A thorough inspection of the railway axles generally envisages at least detection of the profile of the wheels, and possibly - in combination - acquisition of an image of the rolling surface and inspection via ultrasound instruments for tracking down structural faults, such as incipient cracks that may trigger failure due to fatigue. In addition, still further checks are carried out, such as the measurement of the internal gauge and/or of the eccentricity of rolling of the wheels of the railway axle.

Inspection is generally conducted using apparatuses located in a workshop pit substantially straddling a trunk of track in the repair shop.

The above apparatuses generally include one or more self-propelled elements carrying the inspection instruments and may be:

>   i) of a stationary type, comprising a self-moving element that is stationary during measurement and is equipped with a motor drive that is able to transmit the movement to the railway axle to be inspected, the railway axle being supported by the element itself and being likewise stationary with respect to horizontal translation; or
>   ii) of a dynamic type, where the at least one self-propelled element "follows" the movement of the railway axle along the workshop track.

The problem common to all measuring apparatuses of a known type is the very considerable overall dimensions, both of the mobile elements and of the wiring and transmissions used for supply and movement of the mobile elements themselves. In the case in point, all known devices include rope-and-pulley transmissions and wiring that, albeit laid out rationally, are exposed and may thus constitute a hindrance to movement.

This relegates the use of the above apparatuses just to the environment of the workshop, in so far as only in this way is it possible to accommodate all the components necessary for operation.

Object of the invention

The object of the present invention is to solve the technical problems mentioned previously.

In particular, the object of the invention is to provide an apparatus for inspecting railway axles that can be installed straddling a portion of railway track, in particular (but not exclusively) a rectilinear portion of a track where the railway trains proceed at a low speed (max 15 km/h) of a railway line, and that can thus carry out inspection of the railway axles of a railway vehicle forming part of a train as it moves along the track.

Summary of the invention

The object of the invention is achieved by an apparatus for inspecting railway axles and a corresponding inspection method that have the features forming the subject of one or more of the ensuing claims, which form an integral part of the technical disclosure herein provided in relation to the invention.

In particular, the object of the invention is achieved by an apparatus for inspection of railway axles that can be installed on a railway track, the apparatus including, in association with each rail of said railway track:

-   at least one guide element, slidably engaged on which is a mobile element including one or more instruments configured for the inspection of a railway axle;
-   a motor unit configured for displacing a corresponding mobile element along said guide element, wherein said motor unit includes a linear electric motor; and
-   a control unit configured for the management of each motor unit and said one or more measuring instruments,

wherein said control unit is moreover configured for driving each motor unit so as to synchronize the movement of each mobile element with the rectilinear advancement movement of a corresponding wheel of said railway axle along said track so as to enable inspection of the wheel in movement along the track via said one or more measuring instruments.

Furthermore, the object of the invention is achieved by a method for inspecting the wheels of one or more railway axles as they move along a track using an apparatus according to one or more of the preceding claims, the method including:

-    a first step of determining the advancement speed of said railway axle;
-    a second step of determining a speed profile of the mobile elements for intercepting the wheels of the railway axle in a pre-set point and of acceleration of the mobile elements as a function of the given speed profile;
-    a third step of centering the mobile elements with respect to the corresponding wheel;
-    a fourth step of starting an inspection of the wheel using the instruments on board the mobile elements; and
-    a fifth step, which includes, alternatively, calculating a further speed profile to enable interception of the wheels of a possible further railway axle and reiterating the third and fourth steps, or else bringing the mobile elements back into a resting position.

## Brief description of the drawings

The invention will now be described with reference to the annexed drawings, which are provided purely by way of non-limiting example and in which:

-    Figure 1 is an overall perspective view of an apparatus according to various preferred embodiments of the invention;
-    Figure 2 is a view according to the arrow II of Figure 1;
-    Figure 2A is a perspective view according to the arrow IIA of Figure 2;
-    Figure 2B is a perspective view according to the arrow IIB of Figure 2;
-    Figure 2C is a partially sectioned schematic representation of a portion of the apparatus 1, where the viewpoint is substantially the front one with respect to Figure 2A;
-    Figure 3 is a detailed perspective view according to the arrow III of Figure 1 with some components removed for reasons of clarity;
-    Figure 4 is a schematic view according to the arrow IV of Figure 2 and includes a first section 4A, a second section 4B, and a third section 4C illustrating three different configurations for equipment of the apparatus according to the invention;
-    Figure 5, including a portion denoted by the letter "A" and a portion denoted by the letter "B", is a schematic representation of an operating sequence of the apparatus of Figure 1;

-    Figures 6A-D illustrate four examples of defects of assembly and/or post-assembly deformations that may occur in a railway axle;
-    Figure 6E illustrates the distribution of the stress within a wheel of a railway axle, while Figure 6F is a schematic illustration of the main defects of a railway wheel in operation and the distribution thereof;
-    Figure 7 is a schematic illustration of a sequence of inspection that can be carried out by means of the apparatus according to the invention; and
-    Figures 8 and 9 illustrate two further embodiments of the apparatus according to the invention.

## Detailed description of preferred embodiments

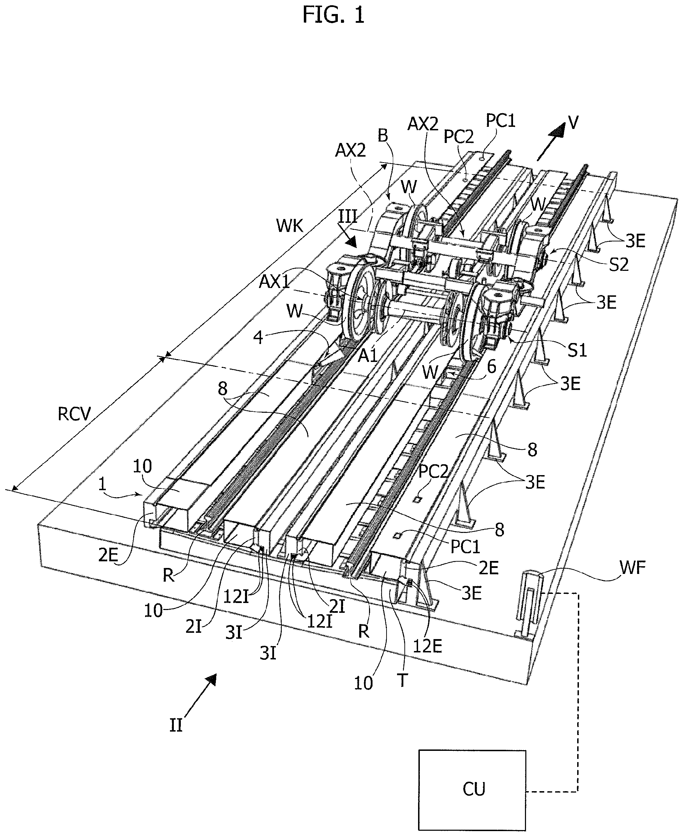

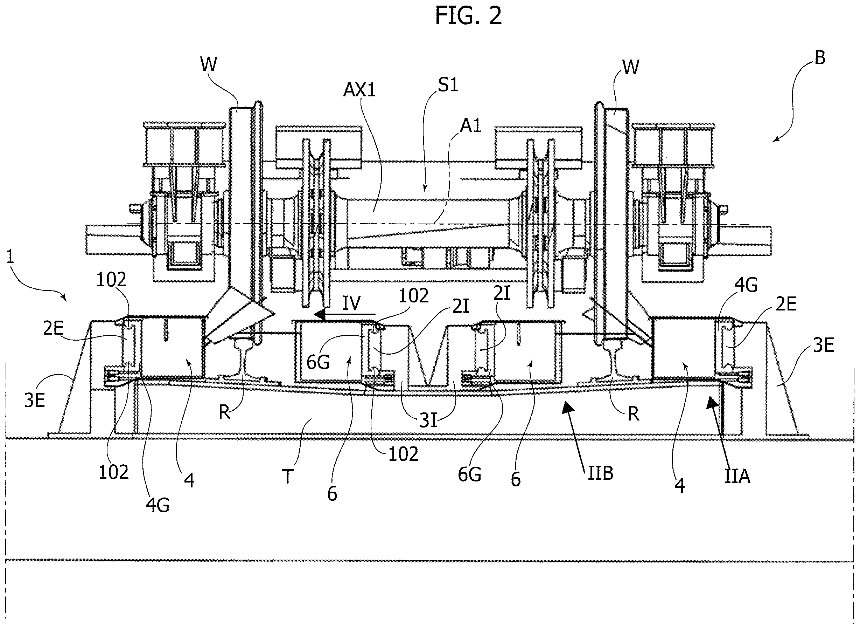

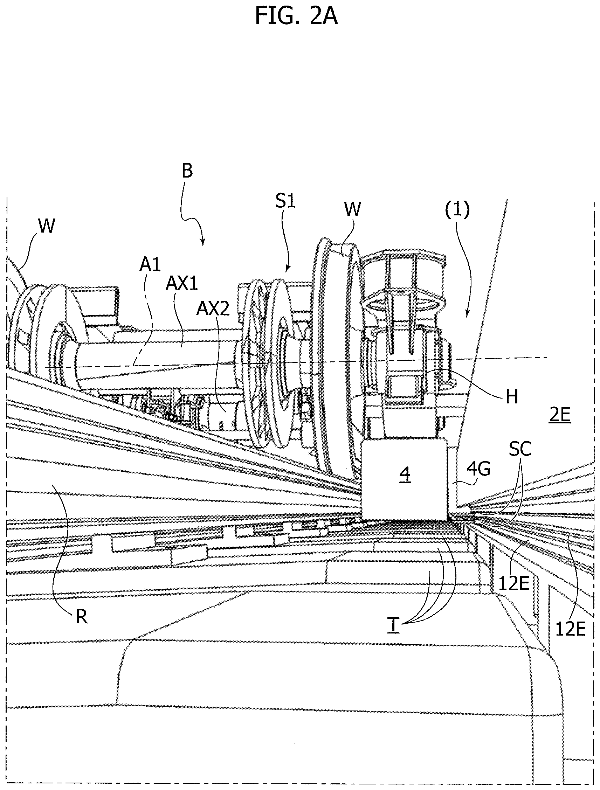

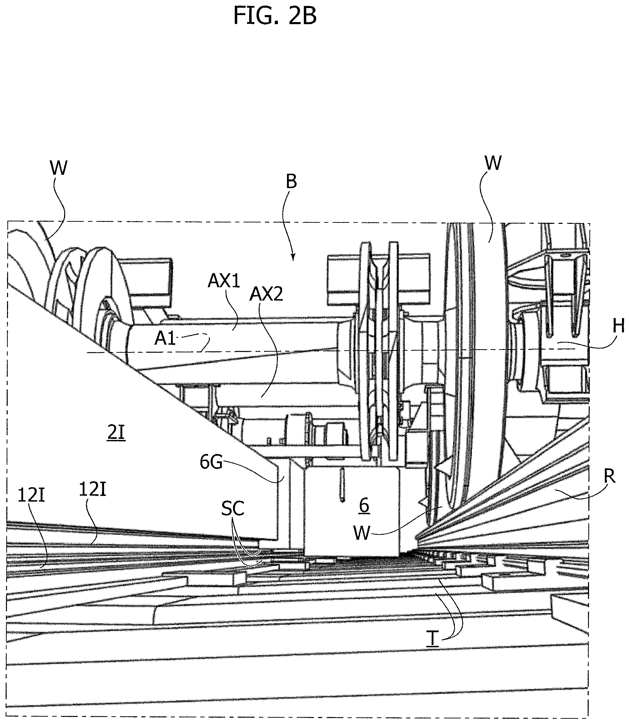

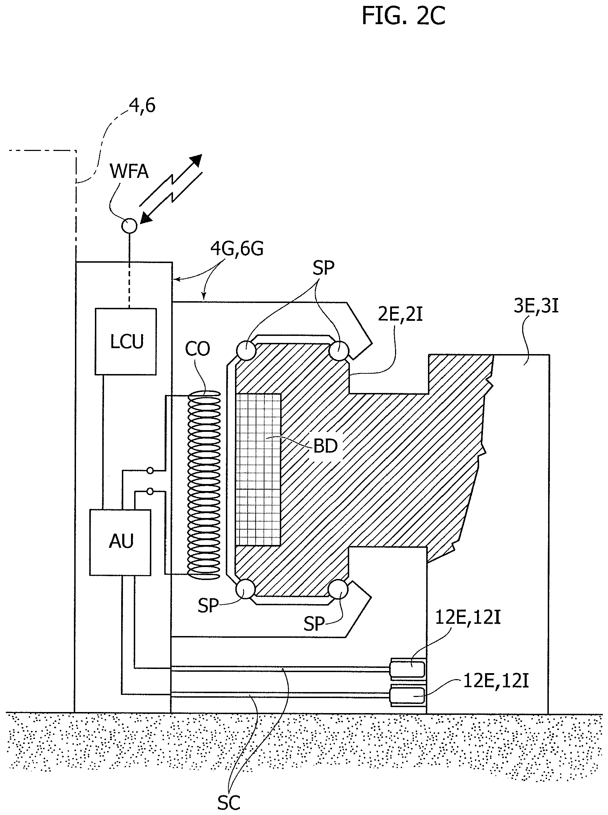

The reference number 1 in Figure 1 designates as a whole an apparatus for checking railway axles on the basis of a preferred embodiment of the invention.
The apparatus 1 is installed substantially straddling a railway track including a pair of rails R resting (and fixed) on sleepers T. The sleepers T may be either of the type resting on ballast or of the type resting on a concrete base (for example, some tracks entering/leaving depots).
The apparatus 1 is substantially symmetrical with respect to the midpoint of the track from the structural and functional standpoint so that the (structural and functional) description will be developed mainly with reference to just one of the rails R, with the understanding that the same components are associated to the other rail R (for this reason, the reference numbers used are the same for the right-hand side and the left-hand side of the apparatus 1) .
With reference to Figures 1 and 2, the apparatus 1 includes, for each rail R, a first guide element 2E located externally with respect to the track and a second guide element 21, which - instead - is located internally with respect to the track. The adverbs "internally" and "externally" referring to the track are meant to indicate an arrangement, respectively, comprised between the two rails R or outside the region between them. In some embodiments, as will be seen hereinafter, the guides 21 are absent, and the apparatus 1 includes only the guides 2E.
Each guide element is shaped like a rectilinear profile extending parallel to each rail R (i.e., longitudinally) and provided with one or more guide profiles. In the example illustrated in the figures, the aforesaid guide profiles consist of cradle-shaped axial grooves extending longitudinally and designated by the reference numbers 102. These are anyway preferentially guide profiles that are commercially available and of a standardized type.
Depending upon the length of the apparatus 1, each guide element can be provided as a single profile or else as a sequence of profiles set up against one another. However, given the lengths typically involved for apparatuses of this type the second solution is the preferred one.

The guide elements 2E, 2I are supported by means of respective brackets 3E, 3I; the brackets 3E are situated externally with respect to the track, for example embedded in the ballast and/or in the ground by means of plinths; the brackets 3I are fixed to the sleepers T or else fixed to the ground by means of plinths like the brackets 3E.

Slidably mounted on each guide element 2E in the longitudinal direction is a moving element designated as a whole by the reference number 4 including a plurality of instruments for inspecting a railway axle.

Slidably mounted in a substantially similar way on each guide element 2I is a second mobile element, which is designated as a whole by the reference number 6 and is also equipped with one or more instruments for inspecting the railway axle. The type and number of the instruments varies on the basis of the type of inspection that is to be carried out, and anyway abundant details will be provided in what follows.

Set along the entire path created by the guide elements 2E, 2I are shielding plates designated by the reference number 8 consisting of metal sheets fixed to the respective brackets 3E, 3I and configured for shielding the area where the mobile elements 4, 6 are located from dirt or further harmful agents coming from above the plane of the track, for example from a railway vehicle as it moves along the track.

In a first longitudinal stretch of the apparatus 1 (recovery stretch), designated by the reference RCV in Figure 1, the shielding plates 8 are combined, both in association with the guide element 2E and in association with the guide element 2I, with box-like protection elements designated by the reference number 10, which are configured for receiving the mobile element 4 or 6 (depending upon whether they are mounted on the guide element 2E or on the guide element 2I) when this is in an inoperative condition, in particular a waiting/resting position, or else when the apparatus 1 is turned off.

The transverse dimensions of the box-like shielding elements 10 are chosen of course in such a way as to enable free longitudinal movement of the mobile elements 4, 6 along the guides 2E, 2I.

Further details of the apparatus 1 will now be described, in particular as regards the mobile elements 4, 6 and the system for moving them.

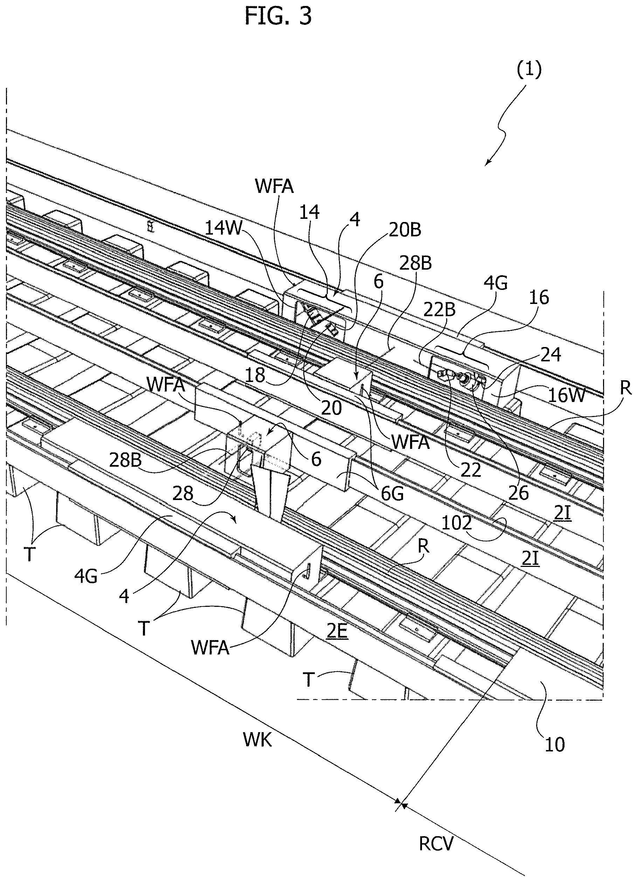

With reference in particular to Figure 3, each of the mobile elements 4, 6 is coupled to the corresponding guide element 2E or 2I by means of a respective slider 4G, 6G, the cross section of which is shaped to provide a shape fit with each of the guide elements 2E, 2I. Alternatively, at the interface between each slider 4G, 6G and the corresponding guide element 2E, 2I there may be arranged cages of rolling elements in order to provide a centering of the slider with respect to the guide element and at the same time reduce the resistance to the relative movement.

With reference moreover to Figures 2A, 2B, provided within each slider 4G, 6G are electrical windings or coils that enable a linear motor to be obtained, where the stator is constituted by the guide element 2E, 2I and the "rotor" (which, being "unrolled", is functionally a slider) is defined by the corresponding slider 4G, 6G to which the mobile element 4, 6 is coupled (in some variants it is also possible to provide the mobile element 4, 6 and the corresponding slider 4G, 6G integrally).

The linear motor thus defined hence provides a motor unit for each mobile element.

Figure 2C is a schematic illustration of a larger number of details of the linear motor that moves the mobile elements 4, 6.

In particular, visible in Figure 2C (which applies indifferently to the mobile element 4 or the mobile element 6) are:

- the slider 4G, 6G, set within which is an electrical coil provided by a solenoid CO;
- a plurality of rolling elements SP set between the slider 4G, 6G and the guide element 2E, 2I (here the guide element 2E, 2I is represented by a profile having a substantially octagonal shape: since the components are commercially available and standardized, they are available in a plurality of different standard shapes); and
- an actuation unit AU operatively connected to the coil CO and to a local control unit LCU, which is in turn configured for communication via radio (for example via Wi-Fi through an antenna WFA) with the outside world.

With reference now to Figures 2A, 2B and 2C, in order to avoid having any wiring within the track that could hamper movement of the mobile elements, if not even of a railway vehicle travelling along the track, the supply of the motor units of each mobile element is obtained by equipping each slider 4G, 6G with a pair of sliding contacts SC, electrically connected to the actuation unit AU (Figure 2C).

As already mentioned, the ensemble of components illustrated in Figure 2C is generally available on the market as linear-motor/guide-element pre-assembled unit.

The aforesaid sliding contacts SC are in turn slidable in corresponding supply paths designated by the reference number 12E and 12I (clearly depending upon whether they are associated, respectively, to the guide element 2E or else to the guide element 2I). Preferentially, fixing of the supply paths 12E, 12I is provided at the brackets 3E, 3I carrying the guide elements 2E, 2I.

The paths 12E, 12I are in turn connected to an electrical-supply source (not illustrated), which is configured for supplying the actuation unit AU on board the slider 4G, 6G, which in turn is configured for driving the coil CO on board the slider 4G, 6G as a function of the signals that are exchanged with the local control unit LCU.

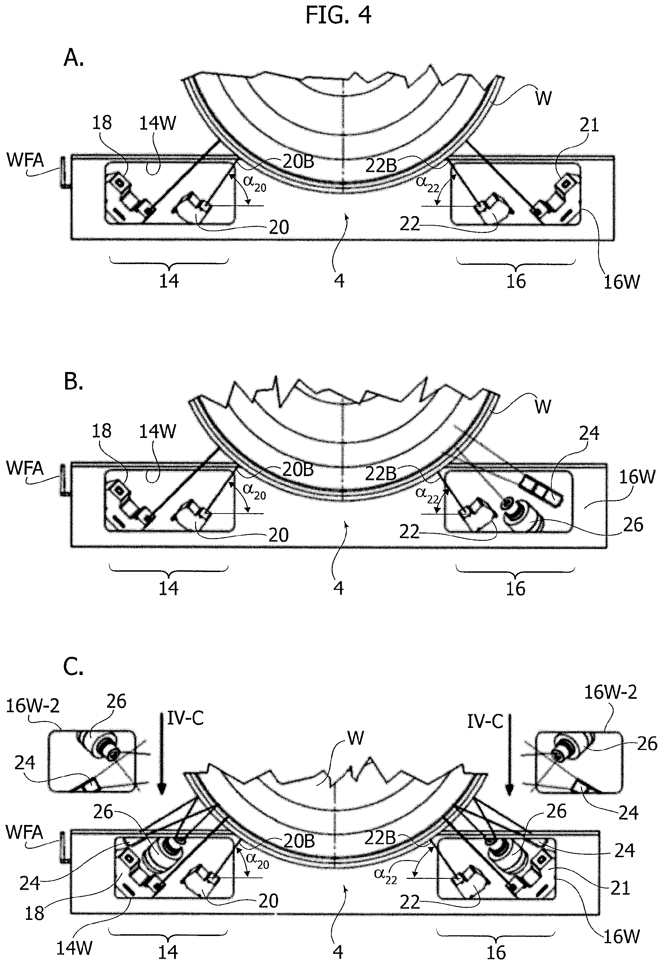

With reference to Figures 3 and 4, each mobile element 4 includes a first set of instruments and a second set of instruments designated by the reference numbers 14, 16 and located substantially at opposite longitudinal ends thereof. The instruments of the units 14, 16 are in view of the external environments through respective windows 14W and 16W provided in the (box-like) body of the mobile element 4.

The kits of instruments on board the mobile elements 4, 6 is variable according to the requirements, primarily the type of inspection that is to be carried out using the apparatus 1.

With the aid of Figure 4, in the three sections A, B, C three examples of kits of instruments for the mobile element 4 will be illustrated.

A first example of kit is illustrated in Figure 4A and has the following characteristics:

- the first set of instruments 14 includes a first optical-triangulation laser sensor designated by the reference number 18 and a first laser distance-measuring instrument designated by the reference number 20; preferentially, the latter is mounted in such a way that a measuring laser beam 20B emitted thereby is inclined by an angle of 45° with respect to the horizontal; this angle is designated by the reference $\alpha_{20}$ in Figure 4A;

- the second set of instruments 16 includes a second optical-triangulation laser sensor designated by the reference number 21, identical to the sensor 18 but mounted symmetrically, and a second laser distance-measuring instrument designated by the reference number 22 and mounted - same as the measuring instrument 20 - in such a way that a measuring laser beam 22B emitted thereby is inclined by an angle of 45° with respect to the horizontal; this angle is designated by the reference $\alpha_{22}$.

The kit illustrated in Figure 4A is particularly indicated in the case where it is desired an accurate detection of the wheel profile also on railway vehicles (for example, certain locomotives) that are equipped with sandboxes located very close to the rail, and that set the rolling surface of the wheel W "in the shade" with respect to the range of observation of the sensor 18 (or 21, depending upon the direction of advance of the vehicle). In this way, duplication of the optical-triangulation sensor enables the second optical-triangulation sensor to frame a region opposite in the chordal direction with respect to the one framed by the first sensor.

A second example of kit is illustrated in Figure 4B and presents the following characteristics:

- the set of instruments 14 is identical to the one already described in relation to the kit illustrated in Figure 4B;

- the set of instruments 16 includes - instead of the sensor 21, an illuminator 24 and an image-acquisition device 26, in particular a video camera that may be of the rectangular-image type, hence equipped with CCD or else CMOS sensor or, alternatively, may be of the linear type, i.e., one able to acquire a one-dimensional image (namely, a line of pixels); the illuminator 24 co-operates with the video camera 26, given that it is configured for directing a beam of light onto the area framed by the video camera itself; the laser measuring instrument 22 - mounted in the same way as described in regard to Figure 4A - completes the kit.

The kit illustrated in Figure 4B corresponds to the one to be found in the views of the apparatus 1 appearing in the other figures.

A third example of kit is illustrated in Figure 4C and presents the following characteristics:

- the first set of instruments 14 includes the first optical-triangulation laser sensor 18 and the first laser distance-measuring instrument 20, the illuminator 24, and the video camera 26; and

- the second set of instruments 16 includes the second optical-triangulation laser sensor 21, the second laser distance-measuring instrument 22, as well as a second illuminator 24, and a second video camera 26.

This is hence a kit with completely duplicated instruments: each set of instruments 14, 16 possesses the same instruments.

In a preferred embodiment, the illuminator 24 and the video camera 26 of each of the sets of instruments 14, 16 operate through a further window 16W-2 set on one top surface of the mobile element 4 (here illustrated in false view according to the arrow IV-C).

In other embodiments, also the illuminator 24 and the video camera 26 act through the window 16W: notwithstanding this, there is no appreciable interference with the other instruments in the same set (14 or 16) in so far as the directions in which the instruments operate are different, and - above all - the sensors 18 and 21 operate with infrared light, whilst the video camera 26 (in particular if it is of a linear type) works with wavelengths of less than 700 nm (that is the lower limit of the infrared band).

The kit illustrated in Figure 4C, which substantially combines the advantages and the characteristics of both the kits of Figures 4A and 4B, enables an optimal inspection of the wheels of a railway axle (with detection of the wheel profile via the sensors 18, 21 and detection of the image of the rolling surface by means of the video cameras 26) also on vehicles equipped with sandboxes with nozzles very close to the wheel/track interface, for example certain locomotives.

It is moreover to be noted that as an alternative to the preferential kit of Figure 4C, also possible are embodiments where the kit of instruments on board the mobile element 4 includes the video camera 26 (and the illuminator 24) in just one of the two sets of instruments, for example the set 16.

Anyway, all the kits of the mobile element 4 that have an asymmetrical set of instruments may present a performance conditioned to a variable extent by geometrical limits: typically, the reason for this is that some railway vehicles with two-axle bogies and equipped with sandboxes have the sandboxes arranged symmetrically on the two extreme axles so that-whatever the direction of travel - the first axle will present the sandbox on the side facing the direction of travel and the second axle on the opposite side.

It is moreover to be noted that the presence of the measuring instruments 20 and 22 is a constant of all the kits in so far as they - as will be seen - constitute a device for centering the mobile element 4.

With reference once again to Figure 3, the instruments on board the mobile element 6 will now be described. In a preferred embodiment, the mobile element 6 includes a third laser distance-measuring instrument designated by the reference number 28 and mounted in such a way that a laser beam 28B emitted thereby is substantially aligned to the horizontal and is oriented in a direction perpendicular to the rails R.

In addition, the mobile element 6 can be equipped with a further laser triangulation sensor similar to the sensors 18 and 21 and mounted so as to focus the beam of laser light emitted thereby substantially on the area where the beam of laser light of the sensor 18 (or 21; of both of the sensors 18 and 21 in the case where yet a further optical-triangulation sensor is present on the mobile element 6) is focused. In this way, as will be seen in what follows, it is possible to detect in a complete way the profile of a wheel of a railway axle inspected using the apparatus 1.

The apparatus 1 is completed by an electronic control unit illustrated schematically in Figure 1 and designated by the reference CU. The control unit CU is configured for actuation and management of the mobile elements 4, 6 - in particular of the respective motor units - and of the inspection instruments carried thereby.

The control unit CU consists preferentially of a computer, stored in which is a software for managing the apparatus 1 and a software for processing the data gathered thereby. It is moreover connected to the apparatus 1 by means of a wireless-connection interface. In particular, the unit CU is configured for exchange of data (at output and at input) with the apparatus 1 through a Wi-Fi antenna designated by the reference WF, which is in turn configured for operative communication with the mobile elements 4, 6, in particular with the respective Wi-Fi antennas WFA operatively connected to the local control units LCU.

Operation of the apparatus 1 is described in what follows.

With reference to Figure 1, the apparatus 1 is installed straddling a railway track in such a way that at the opposite sides of each rail R are the guide elements 2E and 21 and the corresponding components coupled and associated thereto, in particular the mobile elements 4, 6.

A bogie B of a railway vehicle (the latter not illustrated for reasons of greater clarity) is moving along the track in a direction and with a sense indicated by the arrow V in Figure 1 during travel of the railway vehicle itself. The bogie B, in the example illustrated in the figures, is of the two-axle type, where each railway axle S1, S2 includes an axle shaft AX1, AX2 on which a corresponding pair of conical wheels W is fitted. The further structural details of the bogie B will not be described in detail in so far as they are in themselves known and not important for the purposes of the present description.

It should be noted, however, that the apparatus 1 is completely bidirectional and can work indifferently in one and the other directions of travel of a railway vehicle along a track; moreover, it can work properly irrespective of the number of axles of the bogie B and of the wheel arrangement of the railway vehicle (even in the case where the vehicle is not equipped with bogie articulated to the chassis, e.g., two-axle wagons).

The apparatus 1 is specifically devised for installation on an ordinary railway line, in so far as the extreme compactness thereof - largely due to the adoption of linear motors for moving the mobile elements 2, 4 - enables installation thereof in reduced spaces.

This does not, of course, rule out the possibility of the apparatus 1 also being used in an ordinary workshop pit.

The apparatus 1 is functionally characterized by two sections, the first associated to the stretch RCV, where the mobile elements 4, 6 are housed when the apparatus 1 is turned off (or in resting conditions) so as to protect them from the action of external agents, the second associated to a stretch WK (working stretch) and consisting of an operative section of the apparatus 1, in which the mobile elements 4, 6 move to carry out an inspection of the railway axles of the bogie B.

Two pairs of photocells PC1, PC2 - which enable the apparatus 1 to operate bidirectionally (i.e., in either direction of advance of the vehicle), are arranged at opposite ends of the apparatus 1; in particular, a first pair is set within the stretch RCV, whilst another pair is set at the opposite end in the stretch WK. Each pair of photocells PC1, PC2 constitutes a functional set of the apparatus 1 that enables start of the cycle of inspection of the railway axles of the bogie B. Assuming advancement of the railway vehicle in the direction and in the sense indicated by the arrow V in Figure 1, the railway axle S2 (in particular, the wheel W), of which the axle shaft AX2 forms part, first intercepts the photocell PC1 then the photocell PC2, which are both connected to the control unit CU.

At the moment when the wheel W of the railway axle S2 intercepts the photocell PC1, the electronic control unit CU starts off a time counter that is stopped at the moment when the same wheel W intercepts the photocell PC2. Given that the distance between the two photocells is a known datum established in the design stage, it is possible to calculate the speed of the railway vehicle simply as the ratio between the distance between the photocells and the time calculated via the counter.

The speed of the bogie (which corresponds to the speed of the railway train of which the vehicle equipped with the bogie B forms part) is used by the electronic control unit CU for governing the electrical linear motors that drive the mobile elements 4, 6.

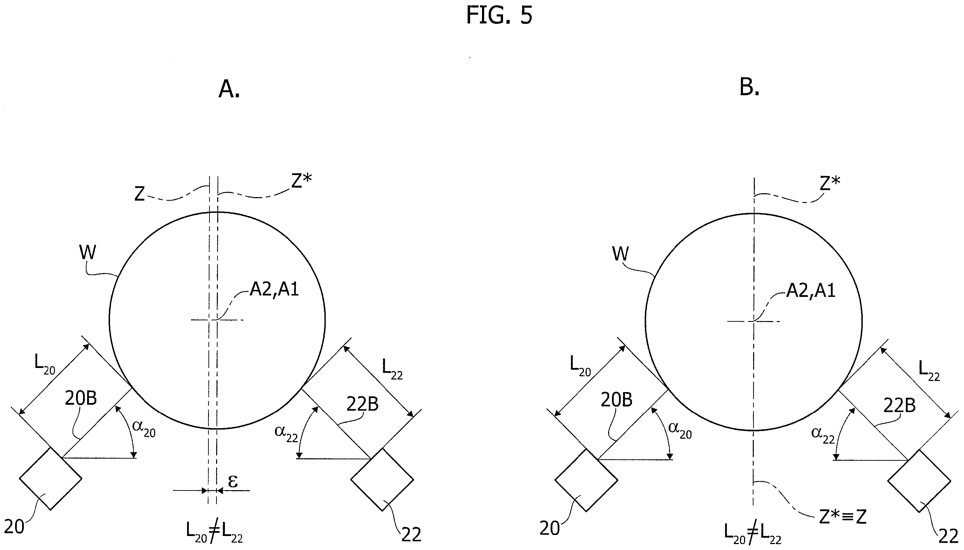

In particular, the electronic control unit CU is programmed for impressing on each of the mobile elements 4, 6 an acceleration ramp such as to provide a synchronization of the rectilinear movement of the mobile elements 4, 6 themselves with the rectilinear movement of the wheel W of the railway axle S2 in a pre-set point along the stretch WK, preferentially chosen immediately downstream of the stretch RCV. It is to be noted that, in order to carry out inspection properly, it is necessary not only for the mobile elements 4, 6 and the railway axle that is to be inspected to move at the same speed, but it is also necessary for the mobile element 4 (and hence the mobile element 6) to move by remaining, so to say, "centered" with respect to the wheel W. See in this connection Figure 5 in order to understand what method and what devices are used to achieve centering.

As already described, the mobile element 4 includes amongst its instruments a first laser distance-measuring instrument and a second laser distance-measuring instrument designated by the numbers 20, 22. These measuring instruments are reproduced schematically in Figure 5, where they appear with the same reference numbers. At the end of the acceleration ramp impressed on the linear motors by the control unit CU, generally the position of the mobile element 4 corresponding to the wheel W is the one illustrated schematically in Figure 5A.

In the case in point, a vertical axis Z* passing through the axis of rotation of the axle shaft AX2 (the same applies to the axle shaft AX1 and the railway axle S1) is located at a distance designated by the reference ε from a centre-line vertical axis Z of the mobile element 4. The laser distance-measuring instruments 20, 22 are arranged symmetrically with respect to the axis Z, and their installation is such that the measuring laser beams 20B, 22B are inclined and mutually converging with respect to the axis Z.

The misalignment is detected by the laser measuring sensors 20, 22, which detect respective distances L20, L22 different from one another. This information is then transmitted to the control unit CU that governs the linear motors of each of the two mobile elements 4 in such a way as to eliminate the misalignment ε.

The system thus operates with closed-loop logic: a position command (with feedback also on the speed value to stabilize the movement as much as possible) imparted on the linear motor to eliminate any misalignment is fed back via the measurement of the distances L20, L22. In this way, the control unit CU can stop correction of position of the mobile element 4 when the two signals L20, L22 correspond to two substantially identical measurements of distance.

It is to be noted that the mobile element 6 is driven by the same commands, except for any possible temporal and/or spatial offset due to the different location of the measuring instruments, as those imparted on the mobile element 4.

Centring is achieved with the railway vehicle travelling and the mobile elements 4, 6 moving, which thus imposes the need to provide for elimination of any misalignment, superimposing a corrective position command on the position command that derives from imparting the acceleration ramp (as mentioned before, the value of speed is used as further variable for the feedback in order to stabilize movement).

Once centring has been achieved, the apparatus 1 can proceed with inspection of the railway axle. For this purpose, with the aid of Figure 4, the optical-triangulation laser sensor 18 impinges with its beam upon the rolling surface of the wheel W, detecting (with pre-set frequency, for example 400 measurements per second) the profile thereof along the entire rolling circumference. In this way, it is possible to determine in which regions of the wheel W there are greater deviations from the nominal geometry of the profile of the wheel W.

On the opposite side of the mobile element 4, the illuminator 24 lights up an area of the rolling surface of the wheel W, which is acquired by the video camera 26. In the case where the video camera 26 is of the rectangular-image type, hence with CCD sensor or CMOS sensor, the successive images acquired must be assembled with a certain overlapping between them.

In the case where, instead, the video camera is of a linear type, each acquisition corresponds to a basically mono-dimensional image of the rolling surface (corresponding in particular to a line given by the intersection of a radial plane with the rolling surface) so that the final image of development of the rolling surface of the wheel W is obtained by setting the images acquired by the linear video camera in sequence alongside one another.

As regards the mobile element 6, the beam of laser distance-measuring instrument 28 impinges upon on the inner face of the wheel W, enabling verification of any possible anomalies in the internal gauge, viz., the distance between the inner faces of the wheels W of each axle.

In fact, the transverse distance between the measuring instruments 28 is a known datum established at the design stage: by adding this distance to the distances detected by the measuring instruments 28, precisely the distance between the inner faces of the wheels W is obtained. Of course, given that the bogie B is moving, the measurement is carried out on a circumference on the inner face of the wheels W, enabling the measurement of the internal gauge in one complete revolution of the wheels to be obtained.

Thanks to this information, it is possible to detect errors of fitting of the wheels on the axle shafts (for example, railway axles with defects of convergence or camber) and even an incorrect assembly of the railway axles on the bogie B or deformations subsequent to assembly.

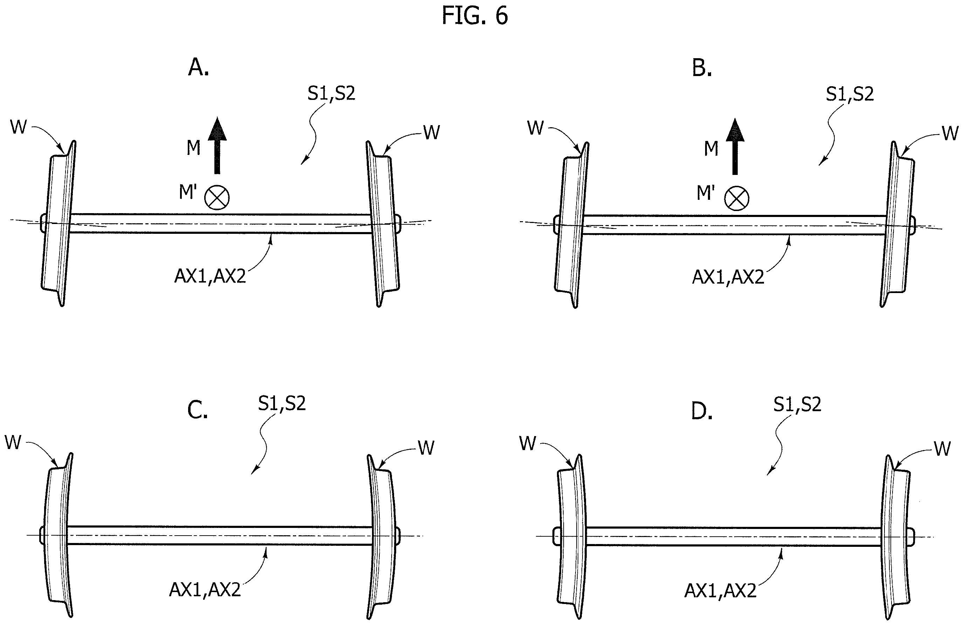

With reference to Figures 6A-D, the main errors of assembly and/or post-assembly deformations of the railway axle S1 (or S2) are here schematically illustrated. Figure 6A may represent both a plan view of the railway axle S1 (or S2) and a front view. In the first case, the reference M indicates a direction of travel of the railway vehicle on which the railway axle is installed. In the second case, the direction of travel is designated by M' and is perpendicular to the plane of the figure.

Once again in the first case, the position of the wheels W is such that they present a defect of convergence, i.e., as is known, a rotation of the axes of the wheels about a vertical axis with respect to a normal condition where the axes of the wheels coincide with the axis of the axle shaft AX1 (or AX2).

In the second case, instead, Figure 6A would represent a defect of camber, i.e., as is known, a rotation of the axes of the wheels about a longitudinal axis, hence aligned to the direction of travel M', with respect to a normal condition where the axes of the wheels W coincide with the axis of the axle shaft AX1 (or AX2).

What has been described previously also applies to Figure 6B, where, unlike Figure 1, the defects (of convergence or camber) are asymmetrical.

Figures 6C and 6D illustrate, instead, a warping, respectively inwards and outwards, of the wheels W, where the representation is axisymmetrical with respect to the axle shaft AX1 (or AX2).

The danger of the aforesaid defects of assembly is high in so far as, since they are geometrical defects, it is extremely difficult to contain the effects thereof with modalities used, for example, for phenomena deriving from the dynamics of travel of the railway vehicle such as the swaying motion (which is in general countered with the adoption of yaw dampers on the railway vehicle).

In this connection, it is to be noted that, in addition to the distance in the transverse direction between the measuring instruments 28, also the distance between the laser source of each of them and the inner face of the head of each railway R (of the Vignoles type) is a known datum. By subtracting from this distance the value detected by the measuring instruments 28 it is possible to obtain a measurement of the distance between the inner face of each wheel W and the internal side of the head of the rail R. On the basis of this information, and in particular of the comparison between the distances measured for each of the two wheels W of each railway axle, it is possible to recognise possible errors of assembly of the railway axle on the bogie B.

In combination, the mobile element 6 can be equipped with a further optical-triangulation laser sensor similar to the sensor 18 and situated in a position corresponding thereto. This further laser sensor is configured for impinging with a laser beam upon the inner face of the wheel W for acquiring the part of the profile thereof that cannot be detected by the sensor 18 (because it is in the shade), thus enabling integration of the acquisition of the latter with the portion of profile corresponding to the flange of the wheel W.

In some embodiments, for example in the case where it is not necessary either to check the internal gauge or to carry out a complete detection of the profile of the wheel, neither the mobile elements 6 and the corresponding motor units nor the guide elements 21 are present. In these embodiments, the apparatus 1 merely comprises the guides 2E with the mobile elements 4. In this case, it is possible to equip the apparatus 1 with a pair of arrays of laser distance-measuring devices similar to the measuring instruments 20, 22 mounted on a fixed frame. In particular, these arrays have a development parallel to that of the rails, are situated at a height from the ground such as to intercept the inner face of the wheels W and are configured for measuring the internal gauge in separate points of the wheel (they are hence not able to make an essentially continuous measurement like the one made using the instruments on board the mobile elements 6).

In other embodiments, devised for an even closer inspection of the railway axle, each of the mobile elements 4 and 6 (the latter, if it is present) may be equipped with ultrasound sensors configured for verifying the presence of defects in the wheels W. These defects may include the following specific cases:

(i) delamination parallel to the rolling plane of the wheel W, which generally has a depth comprised between 10 mm and 50 mm; this defect is produced by phenomena of thermal fatigue that generate an internal failure starting from pre-existing defects, generally consisting of groups of inclusions; the defect spreads towards the surface of the wheel W on account of the centrifugal force until a portion of material even of considerable size detaches;
(ii) radial notches surfacing in the area of contact between the wheel W and the rail R;
(iii) radial notches surfacing at the outer edge of the tread;
(iv) minor surface defects that propagate towards the inside of the wheel on account of the force of traction to which the tread of the wheels is subjected.

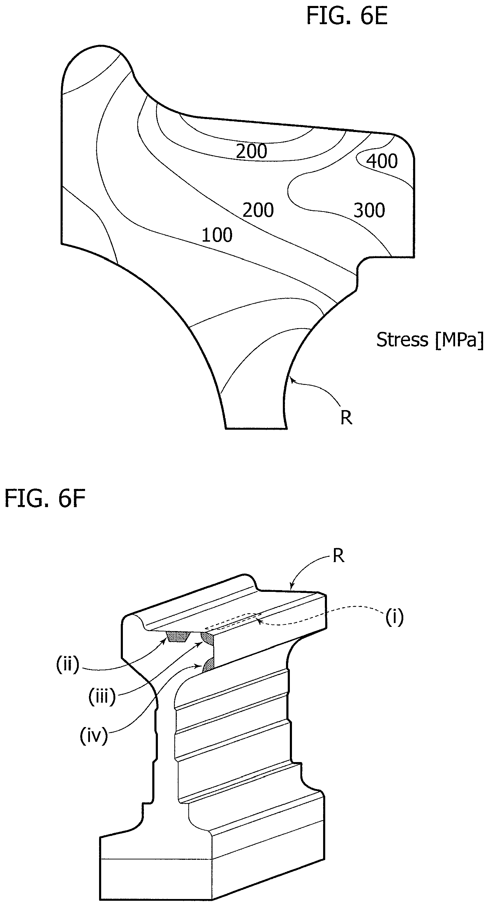

The above defects are schematically represented in Figure 6F and designated by the same references as those used in the above list.

These are very dangerous defects in so far as they appear in the regions where the wheel W is affected by higher values of equivalent stress (see in this connection the diagram of Figure 6E, where the values of stress given are expressed in MPa).

The ultrasound sensors carry out the measurement coming into contact with the rolling surface (tread) of the wheel W. The possibility of equipping the mobile elements 4, 6 with ultrasound sensors that work in contact with the wheel W is ensured by accurate positioning of the mobile elements with respect to the wheels, and in particular by maintaining a synchronized motion between the mobile elements and the wheels according to the modalities described previously.

In addition, each mobile element 4 can be equipped with a further laser distance-measuring instrument set at the top of the body thereof and in such a way that a laser beam emitted thereby will have a substantially vertical direction and will impinge upon a hub H, housed in which is the axle shaft (AX2 or AX1) so as to detect the vertical movements of the hub H during travel of the railway vehicle. The vertical movements of the hub H enable estimation of the eccentricity of rolling of the wheels W since, in an ideal situation, the hub H would follow, with respect to a fixed system, a rectilinear path parallel to the plane of the rail as the railway vehicle is travelling.

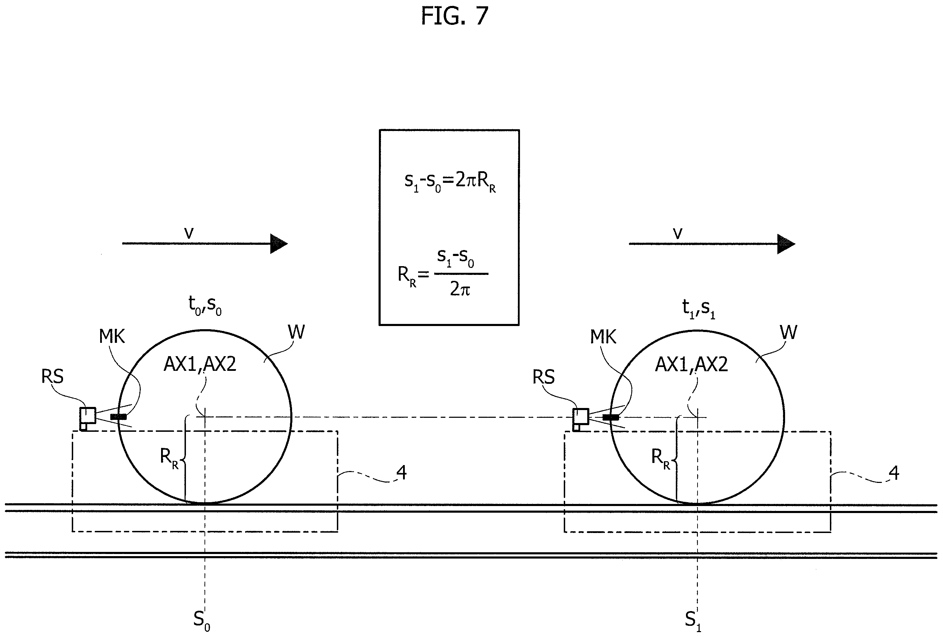

With reference to Figure 7, it will now be illustrated how, thanks to its extreme flexibility, the apparatus 1 may be used for carrying out speedily even further measurements and inspections that would otherwise require a costly vehicle downtime. This is possible simply by varying the kit of instruments of the mobile elements 4 or 6. In the case in point, Figure 7 is a schematic illustration of the mobile element 4 as it moves along the track in a way synchronized with the wheel W at a first instant $t_0$, corresponding to an initial position $s_0$, and at a second instant $t_1$, corresponding to a position $s_1$. The distance between the position $s_0$ and the position $s_1$ corresponds to the rectilinear development of a complete circumference of the wheel W.

To come now to the kit of instruments of the mobile element 4, in addition to the devices already forming part of the kits illustrated in Figures 4A, 4B, 4C, the mobile element 4 includes an optical sensor RS installed preferentially at the top of the mobile element 4 and configured for detecting a mark MK made on the rolling surface of the wheel W (or similar type of marking, for example an impression made in the rolling surface).

The sensor RS sends a signal to the control unit CU (once again with radiofrequency transmission via the antenna of the mobile element 4) whenever it senses the presence of the mark MK, i.e., at each complete revolution of the wheel W.

The space covered by the wheel W during one complete revolution can be expressed as

$$(1) \quad S_1 - S_0 = 2\pi R_R$$

where $R_R$ is the radius of rolling of the wheel W.

From Eq. (1) we immediately obtain

$$(2) \quad R_R = (S_1 - S_0)/(2\pi)$$

The value of the rolling radius RR enables automatic calculation of all the radii of the wheel W (in the transverse direction, since the wheel W is approximately conical with a nominal conicity typically of 1:20) in so far as:

- the profile of the wheel W is detected by one or both of the sensors 18 or 21 in a known system of position co-ordinates with respect to the rail R;
- the fact that the position of the sensor 18 or the sensor 21 (or both) with respect to the rail is known, combined with the fact that the profile of the rail is known, enables a sufficiently precise estimate of what is the point of contact between the rail and the wheel profile detected;
- from detection of the wheel profile also the effective conicity thereof is known: once the point of contact is known from the above estimation, this corresponds to the position of the radius of rolling along the profile; from this latter information, combined with the value of conicity measured, the distribution of the spokes of the wheel W in the direction transverse to that of advance is thus immediately known.

As anticipated in several points of the foregoing description, what has been described regarding inspection of the railway axle S2 is repeated in the same way on the railway axle S1.

Clearly, the synchronization of the movement and of the position of the mobile elements 4, 6 with the railway axle S1 is obtained starting not from a resting condition, but from an already existing condition of movement. In particular, when the wheel W of the railway axle S2 has completed one complete revolution, the motor units of the mobile elements 4, 6 are governed so as to face the railway axle S1 that follows in the direction of advance of the bogie B. The reference is constituted by the value of speed detected via the photocells PC1 and PC2 at the moment when they have intercepted the bogie B, a value that anyway is updated during inspection. As soon as the mobile elements intercept the wheel W of the railway axle S1, there is set under way the procedure of centring the mobile element 4 (and consequently the mobile element 6) with respect to the wheel W of the railway axle S1, which develops with modalities altogether identical to those described in Figure 5 for the railway axle S2. Inspection of the railway axle S1 ceases after one complete revolution thereof.

To represent schematically and sum up what has been described so far, the method of inspection of railway axles as they move along the track, implemented using the apparatus 1, includes:

- a first step of determining the speed of advance of the railway axle, in particular, in the case described, of the first railway axle in the direction of advance of the bogie B (i.e., the railway axle S2);

- a second step of determining a profile of speed of the mobile elements 4 and 6 (the latter if present) for intercepting the wheels W of the aforesaid railway axle in a pre-set point along the stretch WK, and of acceleration of the mobile elements 4 and 6 (the latter, if it is present) as a function of the aforesaid speed profile; the algorithm of calculation of the path of the mobile elements 4, 6 is altogether general and takes into account the initial and final speeds and positions thereof, as well as the speed of the train/railway vehicle;

- a third step of centring the mobile elements 4 and 6 (the latter, if it is present) with respect to the corresponding wheel W;

- a fourth step of starting an inspection of the wheel W using the instruments on board the mobile elements 4 and 6 (the latter if present);

- a fifth step, to be implemented after the wheels W of the first railway axle have completed one complete revolution, including - alternatively - calculating a further speed profile to enable interception of the wheels W of a possible further railway axle (in the case in point, the railway axle S1, which follows, in the direction of advancement of the bogie B) and reiterating the third and fourth steps, or else bringing the mobile elements 4, 6 back into a resting position within the stretch RCV; it is to be noted that the detection of the presence of a further railway axle (S1, in the case in point) that follows the railway axle during inspection (S2, in the case in point) is possible once again thanks to the photocells PC1 and PC2.

As already described, the first step includes:

- intercepting the railway axle by means of the photocell PC1 and starting the time counter;

- intercepting the railway axle by means of the photocell PC2 and stopping the time counter,

- calculating the speed of advance of the railway axle as ratio between a longitudinal distance between the photocells PC1 and PC2 and the time calculated by the aforesaid counter.

The second step includes, instead, determining the speed profile having as input datum an acceleration to be imparted to the mobile elements 4, 6, which depends, for example, upon the performance of the linear motors and the masses of the mobile elements 4, 6.

Finally, the third step includes:

- detecting a first distance L20 between the first laser distance-measuring instrument 20 and the wheel W, in particular the rolling surface thereof (Figure 5);

- detecting a second distance L22 between the second laser distance-measuring instrument 22 and the wheel W, in particular the rolling surface thereof (Figure 5); and

- moving the mobile element 4 with respect to the wheel W until substantially identical values of these first and second distances L20, L22 are found.

It should moreover be noted that, also following upon centring, the control unit CU actuates the linear motors of the mobile elements 4, 6 so as to correct any possible errors due to minor variations of speed of the railway vehicle/train.

The data acquired by the measuring instruments on board the mobile elements 4, 6 are then transferred through the Wi-Fi antenna WF to a terminal on the ground, from which they can be analysed by technical personnel.

All the measurements and recordings referred to in the foregoing description may be made during normal travel of a train along a railway line, where the apparatus 1 is set substantially straddling the track.

What for the most part renders possible installation of the apparatus 1 along an ordinary railway line (as well, of course, as on a track located in a repair-shop pit) is the miniaturization of the system for driving the mobile elements via linear motors provided directly via the guide elements (both the fixed ones 2E, 21 and the sliders of the mobile elements) and supply of the above mobile elements via sliding contacts, which are also associated to the guide elements.

As compared to known systems, which exploit external wiring and rope-and-pulley transmissions, the improvement is considerable. The system is without any exposed cables that are a potential source of hindrance and danger for possible operators or for the railway trains.

Thanks to the apparatus 1 it is thus possible to eliminate completely recourse to any withdrawal from service of the railway train for inspecting the railway axles, with a considerable economic saving.

Of course, the details of construction and the embodiments may vary widely with respect to what has been described and illustrated herein, without thereby departing from the scope of the present invention, as defined by the annexed claims.

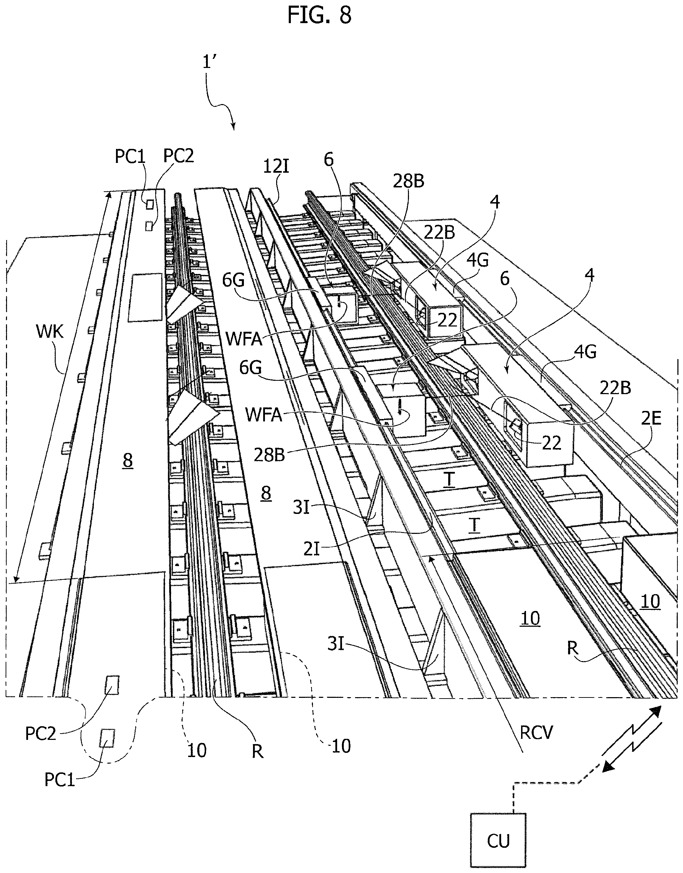

For example, with reference to Figure 8 (the reference numbers that are identical to the ones already adopted designate the same components already described), in a further embodiment of the apparatus according to the invention, designated by the reference number 1', the mobile elements associated to each of the rails R are duplicated. In the case in point, the apparatus 1' includes, in association with each rail R, two mobile elements 4 and two mobile elements 6, each of which is mobile along a single guide element 2E, 21 respectively.

The kit of instruments of each mobile element may contemplate all the alternatives described previously.

When the apparatus 1' is in resting conditions, the two pairs of mobile elements 4, 6 are housed in the box-like protection elements 10 that define the recovery stretch RCV. In this embodiment, it is preferable to envisage the stretch RCV with a length greater than that of the apparatus 1' so as to guarantee a larger space available for both of the mobile elements 4 and 6 on each side. At the moment of detection of the passage of a railway vehicle via the photocells PC1 and PC2, the mobile elements exit from the box-like protection elements 10 and start inspection of the railway axles according to the modalities described previously. It should moreover be noted that in some variants - in the same way as has been described in relation to the apparatus 1 - it is possible that only the mobile elements 4 are present in duplicated configuration.

The apparatus 1' enables reduction of the time necessary for carrying out a complete inspection of the railway wheels of a multi-axle bogie, in so far as it is able to process a pair of railway axles simultaneously. Nevertheless, the apparatus 1 may have a longitudinal extension shorter than that of the apparatus 1' in so far as - assuming as reference inspection of a railway vehicle equipped with a pair of two-axle bogies - the envelope of the longitudinal strokes performed by the apparatus 1 is smaller if compared to what is necessary for the same inspection carried out via the apparatus 1 in so far as the mobile elements of the latter must handle four distinct, not temporally overlapping, cycles of interception of the wheel W, centring, and inspection, during which the railway vehicle being inspected is moving.

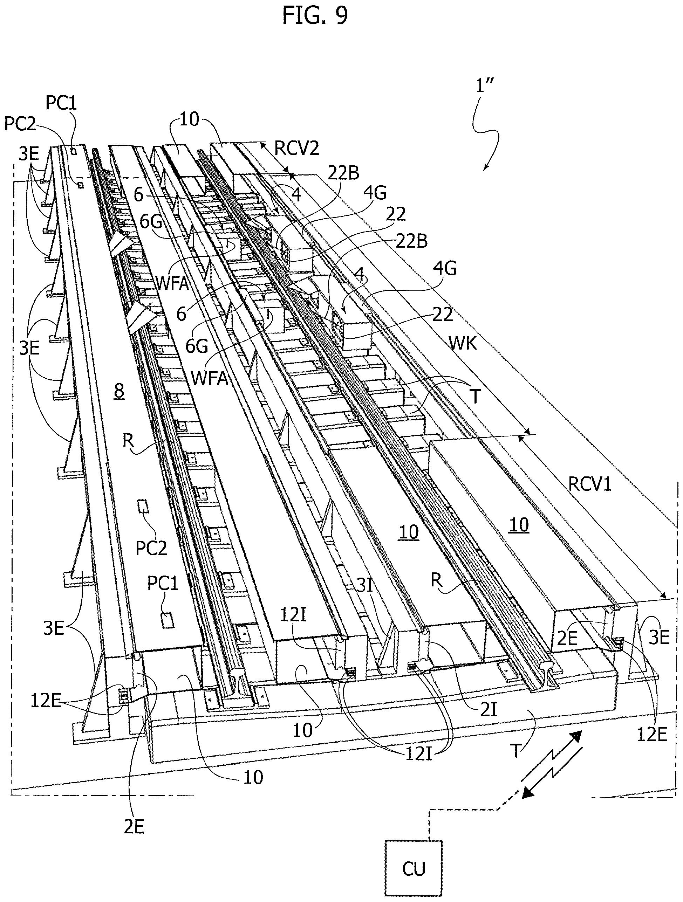

The reference number 1" in Figure 9 designates yet a further embodiment of the apparatus according to the invention. All the reference numbers identical to the ones already used previously designate the same components already described. The apparatus 1" is configured basically as a variant of the apparatus 1': it maintains, in particular, the duplicated configuration of the mobile elements 4, 6 on each side of each rail R, but includes a first recovery stretch RCV1 and a second recovery stretch RCV2 located at opposite longitudinal ends of the apparatus 1" so as to comprise between them the working stretch WK. In the apparatus 1", for each pair of mobile elements 4, 6, a first mobile element is recovered within the respective stretch RCV1 (defined by a corresponding box-like protection element 10), whilst a second mobile element is recovered within the respective stretch RCV2 (once again defined by a corresponding box-like protection element 10).

As a whole, the apparatus 1" numbers eight (8) box-like protection elements 10 at opposite ends of the apparatus 1". In this way, at the moment of detection of the passage of a railway vehicle via the photocells PC1 and PC2, the mobile elements 4, 6 exit from the box-like protection elements 10 with opposite directions of travel, substantially meeting up with one another. Inspection of the railway axles is carried out basically according to the modalities described.

Finally, it should be noted that in some variants - in the same way as has been described in relation to the apparatuses 1, 1' - it is possible that only the mobile elements 4 are present in duplicated configuration.

## Claims

1.  An apparatus (1, 1', 1") for inspection of railway axles (S1, S2) that can be installed on a railway track, the apparatus including, in association with each rail (R) of said railway track:

    - at least one guide element (2E, 21), slidably engaged on which is a mobile element (4, 6) including one or more instruments (18, 20, 21, 22, 26, 28) configured for the inspection of a railway axle (S1, S2) ;
    - a motor unit (4G, 6G) configured for the displacement of a corresponding mobile element (4, 6) along said guide element (2E, 21); and
    - a control unit (CU) configured for the management of each motor unit (4G, 6G) and said one or more measuring instruments (18, 20, 21, 22, 26, 28),

    wherein said control unit (CU) is moreover configured for driving each motor unit (4G, 6G) so as to synchronize the movement of each mobile element (4, 6) with the rectilinear advancement movement of a corresponding wheel (W) of said railway axle (S1, S2) along said track, so as to enable the inspection of the wheel (W) in movement along the track via said one or more measuring instruments (18, 20, 21, 22, 26, 28),
    the apparatus (1, 1', 1") being **characterized in that** said motor unit (4G, 6G) includes a linear electric motor,
    **in that** it includes, for each rail (R) of the track, a first mobile element (4) set externally with respect to the track, wherein said first mobile element includes a first set of instruments and a second set of instruments, wherein the first set of instruments includes a first laser distance-measuring instrument (20) and an optical-triangulation laser sensor (18) configured for detecting a profile of a wheel (W) of a railway axle, and wherein the second set of instruments includes:

    - a second laser distance-measuring instrument (22) and an image-acquisition device (26) configured for acquiring an image of a rolling surface of said wheel (W); or
    - the second laser distance-measuring instrument (22) and a second optical-triangulation laser sensor (21) mounted symmetrically with respect to said first optical-triangulation laser sensor (18); or
    - the second laser distance-measuring instrument (22), the second optical-triangulation laser sensor (21), and the image-acquisition device (26) configured for acquiring an image of a rolling surface of said wheel (W), wherein moreover the image-acquisition device (26) is preferably installed also in the first set of instruments (14), and

**in that** said first and second laser distance-measuring instruments (20, 22) are arranged symmetrically with respect to a vertical centre-line axis (Z) of said first mobile element (4) and in such a way that a measuring laser beam (L20, L22) emitted by each of them is inclined and converging with respect to said vertical centre-line axis (Z).

2. The apparatus (1, 1', 1") according to Claim 1, wherein each linear motor includes a stator (2E, 21) and a slider (4G, 6G), movable with respect to the stator (2E, 21), wherein each stator (2E, 21) is provided by a corresponding guide element (2E, 21) and said slider (4G, 6G) is coupled to a corresponding mobile element (4, 6).

3. The apparatus (1, 1', 1") according to Claim 1, further including, in association with each rail, a second mobile element (6) set internally with respect to the track and including a laser distance-measuring instrument (28) configured for measuring a distance comprised between the latter and an inner face of the wheel (W) of said railway axle.

4. The apparatus (1, 1', 1") according to Claim 1, further including two pairs of photocells, which include a first photocell (PC1) and a second photocell (PC2) that are configured for detecting an advancement speed of a railway axle (S1, S2) of a train as in movement along said track.

5. The apparatus (1, 1', 1") according to Claim 1 or Claim 2, wherein each linear electric motor is supplied by means of sliding contacts (SC) fixed to the slider (4G, 6G) and slidable within corresponding supply paths (12E, 121).

6. The apparatus (1, 1', 1") according to any one of the preceding claims, wherein the one or more mobile elements associated to each rail (R) include an ultrasound sensor configured for coming into contact with a rolling surface of the wheel (W) of said railway axle (S1, S2) for seeking defects due to operation of the wheel (W).

7. The apparatus (1, 1', 1") according to any one of Claims 1 and 3 to 6, wherein each first mobile element (4) includes a further laser distance-measuring instrument configured for emitting a measuring laser beam in a substantially vertical direction impinging upon a hub (H), housed in which is said railway axle (S1, S2), so as to detect the distance between the latter and said hub (H).

8. The apparatus (1'; 1") according to any one of the preceding claims, which includes, in association with each rail (R), a pair of first mobile elements (4) arranged externally with respect to the track, and, preferably, a pair of second mobile elements (6) arranged internally with respect to the track.

9. A method for inspecting the wheels (W) of one or more railway axles (S1, S2) in movement along a track using an apparatus (1, 1', 1") according to one or more of the preceding claims, the method including:

   - a first step of determining the advancement speed of said railway axle;
   - a second step of determining a speed profile of the mobile elements (4, 6) for intercepting the wheels (W) of the railway axle in a pre-set point, and of acceleration of the mobile elements (4, 6) according to the given speed profile;
   - a third step of centering the mobile elements (4, 6) with respect to the corresponding wheel (W);
   - a fourth step of starting an inspection of the wheel using the instruments on board the mobile elements (4, 6);

   the method being **characterized in that** it further comprises a fifth step which includes, alternatively, calculating a further speed profile to enable interception of the wheels (W) of a possible further railway axle and reiterating the third and fourth steps, or else bringing the mobile elements back into a resting position, and
   **in that** said third step includes:

   - detecting a first distance (L20) between said first laser distance-measuring instrument (20) of said first mobile element (4) and said wheel (W);
   - detecting a second distance (L22) between said second laser distance-measuring instrument (22) of said first mobile element (4) and said wheel (W); and
   - displacing the first mobile element (4) with respect to the wheel (W) until substantially identical values of said first and second distances (L20, L22) are found.

10. The method according to Claim 9, wherein said first step includes:

   - intercepting the railway axle by means of a first photocell (PC1) and starting a time counter;
   - intercepting the railway axle by means of a second photocell (PC2) and stopping the time counter; and
- calculating the advancement speed of the railway axle as ratio between a longitudinal distance between said first and second photocells (PC1, PC2) and the time calculated by said counter.

11. The method according to Claim 9, wherein said second step includes determining the speed profile having as input datum an acceleration to be impressed upon the mobile elements (4, 6).

12. The method according to any one of Claims 9 to 11, wherein inspection of the railway axle includes calculating a radius of rolling of the wheels (W) thereof, including the following steps:

- detecting a reference element (MK) provided on said wheel (W) at a first instant ($t_0$) and in a first position ($s_0$);
- detecting said reference element (MK) at a second instant ($t_1$) and in a second position ($s_1$), after one complete revolution of said wheel (W); and
- determining the rolling radius via the ratio between the distance between said first and second positions ($s_1 - s_0$) and the value $2\pi$.

**Patentansprüche**

1. Vorrichtung (1, 1', 1") zur Prüfung von Eisenbahnachsen (S1, S2), die auf einem Eisenbahngleis installierbar ist, wobei die Vorrichtung in Zusammenhang mit jeder Schiene (R) des Eisenbahngleises Folgendes beinhaltet:

- mindestens ein Führungselement (2E, 2I), mit dem ein mobiles Element (4, 6) verfahrbar in Eingriff steht, welches ein oder mehrere Instrumente (18, 20, 21, 22, 26, 28) beinhaltet, die für die Prüfung einer Eisenbahnachse (S1, S2) ausgelegt sind,
- eine Motoreinheit (4G, 6G), die zum Verfahren eines entsprechenden mobilen Elements (4, 6) entlang des Führungselements (2E, 2I) ausgelegt ist, und
- eine Steuereinheit (CU), die zur Verwaltung jeder Motoreinheit (4G, 6G) und des einen oder der mehreren Messinstrumente (18, 20, 21, 22, 26, 28) ausgelegt ist,

wobei die Steuereinheit (CU) darüber hinaus dafür ausgelegt ist, jede Motoreinheit (4G, 6G) anzusteuern, um die Bewegung jedes mobilen Elements (4, 6) mit der geradlinigen Fortbewegung eines entsprechenden Rads (W) der Eisenbahnachse (S1, S2) entlang des Gleises zu synchronisieren, um die Prüfung des sich entlang des Gleises bewegenden Rads (W) über das eine oder die mehreren Messinstrumente (18, 20, 21, 22, 26, 28) zu ermöglichen, wobei die Vorrichtung (1, 1', 1") **dadurch gekennzeichnet ist, dass** die Motoreinheit (4G, 6G) einen elektrischen Linearmotor beinhaltet,
dass sie für jede Schiene (R) des Gleises ein in Bezug auf das Gleis außen platziertes erstes mobiles Element (4) beinhaltet, wobei das erste mobile Element eine erste Gruppe von Instrumenten und eine zweite Gruppe von Instrumenten beinhaltet, wobei die erste Gruppe von Instrumenten ein erstes Laser-Abstandsmessinstrument (20) und einen Lasersensor (18) für optische Triangulation beinhaltet, der zum Erfassen eines Profils eines Rads (W) einer Eisenbahnachse ausgelegt ist, und wobei die zweite Gruppe von Instrumenten Folgendes beinhaltet:

- ein zweites Laser-Abstandsmessinstrument (22) und eine Bildaufnahmeeinrichtung (26), die dafür ausgelegt ist, ein Bild einer Rollfläche des Rads (W) aufzunehmen, oder
- das zweite Laser-Abstandsmessinstrument (22) und einen zweiten Lasersensor (21) für optische Triangulation, der in Bezug auf den ersten Lasersensor (18) für optische Triangulation symmetrisch montiert ist, oder
- das zweite Laser-Abstandsmessinstrument (22), den zweiten Lasersensor (21) für optische Triangulation und die zum Aufnehmen eines Bilds einer Rollfläche des Rads (W) ausgelegte Bildaufnahmeeinrichtung (26), wobei darüber hinaus die Bildaufnahmeeinrichtung (26) bevorzugt auch in der ersten Gruppe (14) von Instrumenten installiert ist, und

dass das erste und das zweite Laser-Abstandsmessinstrument (20, 22) in Bezug auf eine vertikale Mittelachse (Z) des ersten mobilen Elements (4) symmetrisch und in solcher Weise angeordnet sind, dass ein von diesen jeweils emittierter Messlaserstrahl (L20, L22) in Bezug auf die vertikale Mittelachse (Z) geneigt ist und mit dieser zusammentrifft.

2. Vorrichtung (1, 1', 1") nach Anspruch 1, wobei jeder Linearmotor einen Stator (2E, 2I) und einen in Bezug auf den Stator (2E, 2I) bewegbaren Schlitten (4G, 6G) beinhaltet, wobei jeder Stator (2E, 2I) durch ein entsprechendes Führungselement (2E, 2I) bereitgestellt ist und jeder Schlitten (4G, 6G) an ein entsprechendes mobiles Element (4, 6) gekoppelt ist.

3. Vorrichtung (1, 1', 1") nach Anspruch 1, welche ferner in Zusammenhang mit jeder Schiene ein zweites mobiles Element (6) beinhaltet, das in Bezug auf das Gleis innen platziert ist und ein Laser-Abstandsmessinstrument (28) beinhaltet, das dafür ausgelegt ist, einen zwischen Letzterem und einer Innenseite des Rads (W) der Eisenbahnachse bestehenden Abstand zu messen.

4.  Vorrichtung (1, 1', 1") nach Anspruch 1, welche ferner zwei Paare von Fotozellen beinhaltet, die eine erste Fotozelle (PC1) und eine zweite Fotozelle (PC2) beinhalten, welche dafür ausgelegt sind, eine Fortbewegungsgeschwindigkeit einer Eisenbahnachse (S1, S2) eines Zugs während einer Bewegung entlang des Gleises zu erfassen.

5.  Vorrichtung (1, 1', 1") nach Anspruch 1 oder Anspruch 2, wobei jeder elektrische Linearmotor mittels Gleitkontakten (SC) versorgt wird, die an dem Schlitten (4G, 6G) befestigt und innerhalb entsprechender Versorgungsbahnen (12E, 121) verfahrbar sind.

6.  Vorrichtung (1, 1', 1") nach einem der vorhergehenden Ansprüche, wobei das eine oder die mehreren jeder Schiene (R) zugeordneten mobilen Elemente einen Ultraschallsensor beinhalten, der dafür ausgelegt ist, mit einer Rollfläche des Rads (W) der Eisenbahnachse (S1, S2) in Kontakt zu kommen, um im Betrieb des Rads (W) verursachte Defekte aufzuspüren.

7.  Vorrichtung (1, 1', 1") nach einem der Ansprüche 1 und 3 bis 6, wobei jedes erste mobile Element (4) ein weiteres Laser-Abstandsmessinstrument beinhaltet, das dafür ausgelegt ist, in einer im Wesentlichen vertikalen Richtung einen Messlaserstrahl zu emittieren, der auf eine Nabe (H) trifft, in welcher die Eisenbahnachse (S1, S2) aufgenommen ist, um den Abstand zwischen Letzterer und der Nabe (H) zu erfassen.

8.  Vorrichtung (1', 1") nach einem der vorhergehenden Ansprüche, welche in Zusammenhang mit jeder Schiene (R) ein Paar in Bezug auf das Gleis außen angeordneter erster mobiler Elemente (4) und bevorzugt ein Paar in Bezug auf das Gleis innen angeordneter zweiter mobiler Elemente (6) beinhaltet.

9.  Verfahren zum Prüfen der Räder (W) einer oder mehrerer sich entlang eines Gleises bewegender Eisenbahnachsen (S1, S2) mittels einer Vorrichtung (1, 1', 1") nach einem oder mehreren der vorhergehenden Ansprüche, wobei das Verfahren Folgendes beinhaltet:

    - einen ersten Schritt des Bestimmens der Fortbewegungsgeschwindigkeit der Eisenbahnachse,
    - einen zweiten Schritt des Bestimmens eines Geschwindigkeitsprofils der mobilen Elemente (4, 6) zum Abfangen der Räder (W) der Eisenbahnachse an einem vorausbestimmten Punkt und einer Beschleunigung der mobilen Elemente (4, 6) gemäß dem vorgegebenen Geschwindigkeitsprofil,
    - einen dritten Schritt des Zentrierens der mobilen Elemente (4, 6) in Bezug auf das entsprechende Rad (W),
    - einen vierten Schritt des Beginnens einer Prüfung des Rads mittels der Instrumente an Bord der mobilen Elemente (4, 6),

wobei das Verfahren **dadurch gekennzeichnet ist, dass** es ferner einen fünften Schritt umfasst, der alternativ ein Berechnen eines weiteren Geschwindigkeitsprofils, um ein Abfangen der Räder (W) einer möglichen weiteren Eisenbahnachse zu ermöglichen, und ein Wiederholen des dritten und des vierten Schritts oder stattdessen ein Zurückbringen der mobilen Elemente in eine Ruheposition beinhaltet, und

dass der dritte Schritt Folgendes beinhaltet:

    - Erfassen eines ersten Abstands (L20) zwischen dem ersten Laser-Abstandsmessinstrument (20) des ersten mobilen Elements (4) und dem Rad (W),
    - Erfassen eines zweiten Abstands (L22) zwischen dem zweiten Laser-Abstandsmessinstrument (22) des ersten mobilen Elements (4) und dem Rad (W) und
    - Verfahren des ersten mobilen Elements (4) in Bezug auf das Rad (W), bis im Wesentlichen identische Werte des ersten und des zweiten Abstands (L20, L22) erhalten werden.

10. Verfahren nach Anspruch 9, wobei der erste Schritt Folgendes beinhaltet:

    - Abfangen der Eisenbahnachse mittels einer ersten Fotozelle (PC1) und Starten eines Zeitzählers,
    - Abfangen der Eisenbahnachse mittels einer zweiten Fotozelle (PC2) und Stoppen des Zeitzählers und
    - Berechnen der Fortbewegungsgeschwindigkeit der Eisenbahnachse als Verhältnis zwischen einem Längsabstand zwischen der ersten und der zweiten Fotozelle (PC1, PC2) und der durch den Zähler berechneten Zeit.

11. Verfahren nach Anspruch 9, wobei der zweite Schritt ein Bestimmen des Geschwindigkeitsprofils beinhaltet, welches als Eingabegröße eine den mobilen Elementen (4, 6) zu verleihende Beschleunigung aufweist.

12. Verfahren nach einem der Ansprüche 9 bis 11, wobei die Prüfung der Eisenbahnachse ein Berechnen eines Rollradius ihrer Räder (W) beinhaltet, welches die folgenden Schritte beinhaltet:

- Erfassen eines auf dem Rad (W) bereitgestellten Bezugselements (MK) zu einem ersten Zeitpunkt ($t_0$) und auf einer ersten Position ($s_0$),
- Erfassen des Bezugselements (MK) zu einem zweiten Zeitpunkt ($t_i$) und auf einer zweiten Position ($s_1$) nach einer vollständigen Umdrehung des Rads (W) und
- Bestimmen des Rollradius über das Verhältnis zwischen dem Abstand zwischen der ersten und der zweiten Position ($s_1 - s_0$) und dem Wert $2\pi$.

**Revendications**

1. Appareil (1, 1', 1") pour l'inspection d'essieux ferroviaires (S1, S2) qui peuvent être installés sur une voie ferrée, l'appareil comportant, en association avec chaque rail (R) de ladite voie ferrée :

   - au moins un élément de guidage (2E, 2I), sur lequel un élément mobile (4, 6) est engagé en coulissement, lequel élément mobile (4, 6) comportant un ou plusieurs instruments (18, 20, 21, 22, 26, 28) configurés pour l'inspection d'un essieu ferroviaire (S1, S2) ;
   - une unité motrice (4G, 6G) configurée pour le déplacement d'un élément mobile correspondant (4, 6) le long dudit élément de guidage (2E, 2I); et
   - une unité de commande (CU) configurée pour la gestion de chaque unité motrice (4G, 6G) et dudit ou desdits plusieurs instruments de mesure (18, 20, 21, 22, 26, 28),

   dans lequel ladite unité de commande (CU) est de plus configurée pour entraîner chaque unité motrice (4G, 6G) de manière à synchroniser le mouvement de chaque élément mobile (4, 6) avec le mouvement d'avancement rectiligne d'une roue correspondante (W) dudit essieu ferroviaire (S1, S2) le long de ladite voie, de manière à permettre l'inspection de la roue (W) en mouvement le long de la voie via ledit ou lesdits plusieurs instruments de mesure (18, 20, 21, 22, 26, 28),
   l'appareil (1, 1', 1") étant **caractérisé en ce que** ladite unité motrice (4G, 6G) comporte un moteur électrique linéaire,
   **en ce qu'**il comporte, pour chaque rail (R) de la voie, un premier élément mobile (4) placé extérieurement par rapport à la voie, où ledit premier élément mobile comporte un premier ensemble d'instruments et un deuxième ensemble d'instruments, où le premier ensemble d'instruments comporte un premier instrument de mesure de distance par laser (20) et un capteur laser à triangulation optique (18) configurés pour détecter un profil d'une roue (W) d'un essieu ferroviaire, et dans lequel le deuxième ensemble d'instruments comporte :

   - un deuxième instrument de mesure de distance par laser (22) et un dispositif d'acquisition d'image (26) configuré pour acquérir une image d'une surface de roulement de ladite roue (W) ; ou
   - le deuxième instrument de mesure de distance par laser (22) et un deuxième capteur laser à triangulation optique (21) montés symétriquement par rapport audit premier capteur laser à triangulation optique (18) ; ou
   - le deuxième instrument de mesure de distance par laser (22), le deuxième capteur laser à triangulation optique (21), et le dispositif d'acquisition d'image (26) configurés pour acquérir une image d'une surface de roulement de ladite roue (W), où de plus, le dispositif d'acquisition d'image (26) est de préférence également installé dans le premier ensemble d'instruments (14), et

   **en ce que** lesdits premier et deuxième instruments de mesure de distance par laser (20, 22) sont agencés symétriquement par rapport à un axe de ligne médiane vertical (Z) dudit premier élément mobile (4) et de sorte qu'un faisceau laser de mesure (L20, L22) émis par chacun d'eux soit incliné et convergeant par rapport audit axe de ligne médiane vertical (Z).

2. Appareil (1, 1', 1") selon la revendication 1, dans lequel chaque moteur linéaire comporte un stator (2E, 2I) et un curseur (4G, 6G), mobile par rapport au stator (2E, 2I), où chaque stator (2E, 2I) est fourni par un élément de guidage correspondant (2E, 2I) et ledit curseur (4G, 6G) est couplé à un élément mobile correspondant (4, 6).

3. Appareil (1, 1', 1") selon la revendication 1, comportant en outre, en association avec chaque rail, un deuxième élément mobile (6) placé intérieurement par rapport à la voie et comportant un instrument de mesure de distance par laser (28) configuré pour mesurer une distance comprise entre ce dernier et une face interne de la roue (W) dudit essieu ferroviaire.

4. Appareil (1, 1', 1") selon la revendication 1, comportant en outre deux paires de photocellules, qui comportent une première photocellule (PC1) et une deuxième photocellule (PC2) qui sont configurées pour détecter une vitesse d'avancement d'un essieu ferroviaire (S1, S2) d'un train lors d'un mouvement le long de ladite voie.

5. Appareil (1, 1', 1") selon la revendication 1 ou 2, dans lequel chaque moteur électrique linéaire est alimenté au moyen de contacts coulissants (SC) fixés sur le curseur (4G, 6G) et pouvant coulisser à l'intérieur des chemins d'alimentation correspondants (12E, 12I).

**6.** Appareil (1, 1', 1") selon l'une quelconque des revendications précédentes, dans lequel le ou les éléments mobiles associés à chaque rail (R) comporte/comportent un capteur à ultrasons configuré pour entrer en contact avec une surface de roulement de la roue (W) dudit essieu ferroviaire (S1, S2) pour rechercher des défauts en raison du fonctionnement de la roue (W).

**7.** Appareil (1, 1', 1") selon l'une quelconque des revendications 1 et 3 à 6, dans lequel chaque premier élément mobile (4) comporte un instrument de mesure de distance par laser supplémentaire configuré pour émettre un faisceau laser de mesure, dans une direction sensiblement verticale, incident sur un moyeu (H), dans lequel est reçu ledit essieu ferroviaire (S1, S2), de manière à détecter la distance entre ce dernier et ledit moyeu (H).

**8.** Appareil (1'; 1") selon l'une quelconque des revendications précédentes, qui comporte, en association avec chaque rail (R), une paire de premiers éléments mobiles (4) agencés extérieurement par rapport à la voie, et de préférence, une paire de deuxièmes éléments mobiles (6) agencés intérieurement par rapport à la voie.

**9.** Procédé d'inspection des roues (W) d'un ou de plusieurs essieux ferroviaires (S1, S2) en mouvement le long d'une voie à l'aide d'un appareil (1, 1', 1") selon une ou plusieurs des revendications précédentes, le procédé comportant :

    - une première étape de détermination de la vitesse d'avancement dudit essieu ferroviaire ;
    - une deuxième étape de détermination d'un profil de vitesse des éléments mobiles (4, 6) pour intercepter les roues (W) de l'essieu ferroviaire dans un point prédéfini, et d'accélération des éléments mobiles (4, 6) selon le profil de vitesse donné ;
    - une troisième étape pour centrer les éléments mobiles (4, 6) par rapport à la roue correspondante (W) ;
    - une quatrième étape de démarrage d'une inspection de la roue à l'aide des instruments à bord des éléments mobiles (4, 6) ;

le procédé étant **caractérisé en ce qu'**il comprend en outre une cinquième étape qui comporte, en variante, le calcul d'un profil de vitesse supplémentaire pour permettre l'interception des roues (W) d'un éventuel essieu ferroviaire supplémentaire et la réitération des troisième et quatrième étapes, sinon le fait de ramener les éléments mobiles dans une position de repos, et

**en ce que** ladite troisième étape comporte les étapes:

    - de détection d'une première distance (L20) entre ledit premier instrument de mesure de distance par laser (20) dudit premier élément mobile (4) et ladite roue (W) ;
    - de détection d'une deuxième distance (L22) entre ledit deuxième instrument de mesure de distance par laser (22) dudit premier élément mobile (4) et ladite roue (W) ; et
    - de déplacement du premier élément mobile (4) par rapport à la roue (W) jusqu'à ce que des valeurs sensiblement identiques desdites première et deuxième distances (L20, L22) soient trouvées.

**10.** Procédé selon la revendication 9, dans lequel ladite première étape comporte:

    - l'interception de l'essieu ferroviaire au moyen d'une première photocellule (PC1) et le démarrage d'un compteur de temps ;
    - l'interception de l'essieu ferroviaire au moyen d'une deuxième photocellule (PC2) et l'arrêt du compteur de temps ; et
    - le calcul de la vitesse d'avancement de l'essieu ferroviaire en tant que rapport entre une distance longitudinale entre lesdites première et deuxième photocellules (PC1, PC2) et le temps calculé par ledit compteur.

**11.** Procédé selon la revendication 9, dans lequel ladite deuxième étape comporte la détermination du profil de vitesse ayant comme donnée d'entrée une accélération à appliquer sur les éléments mobiles (4, 6).

**12.** Procédé selon l'une quelconque des revendications 9 à 11, dans lequel l'inspection de l'essieu ferroviaire comporte le calcul d'un rayon de roulement des roues (W) de celui-ci, comportant les étapes suivantes :

    - détecter un élément de référence (MK) prévu sur ladite roue (W) à un premier instant ($t_0$) et dans une première position ($s_0$);
    - détecter ledit élément de référence (MK) à un deuxième instant ($t_1$) et dans une deuxième position ($s_1$), après une révolution complète de ladite roue (W) ; et
    - déterminer le rayon de roulement via le rapport entre la distance entre lesdites première et deuxième positions ($s_1 - s_0$) et la valeur $2\pi$.

# FIG. 1

FIG. 2

EP 2 853 879 B1

FIG. 2A

# FIG. 2B

# FIG. 2C

EP 2 853 879 B1

# FIG. 3

## FIG. 4

# FIG. 5

A.

B.

EP 2 853 879 B1

# FIG. 6

A.

W

S1,S2

M

M' ⊗

W

AX1,AX2

B.

W

S1,S2

M

M' ⊗

W

AX1,AX2

C.

S1,S2

W

W

AX1,AX2

D.

S1,S2

W

W

AX1,AX2

EP 2 853 879 B1

FIG. 6E

Stress [MPa]

R

FIG. 6F

R

(i)

(ii)

(iii)

(iv)

# FIG. 7

$$s_1 - s_0 = 2\pi R_R$$

$$R_R = \frac{s_1 - s_0}{2\pi}$$

v

v

$t_0, s_0$

RS    MK    W

AX1,AX2

$R_R$

4

$S_0$

$t_1, s_1$

RS    MK    W

AX1,AX2

$R_R$

4

$S_1$

EP 2 853 879 B1

FIG. 8

1′

PC1  PC2  12I  6  28B  4

22B  4G  4  22B

WK  6G  4G  2E

WFA  6  22

8  6G  22

WFA  8  T

28B  T

3I  10

2I  10

3I  R

PC2  RCV

10  R  10

PC1

CU

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10102673 A1
- DE 19924781 A1

- EP 2402227 A1